# FASCICULE DE BREVET EUROPEEN

(11) **EP 4 117 944 B1**
(45) Date de publication et mention de la délivrance du brevet: **10.09.2025**
(21) Numéro de dépôt: 21709432.5
(22) Date de dépôt: 09.03.2021
(51) Int. Cl.: B60K 1/00, B60R 16/023, B60K 11/02, B60L 15/00, B60K 13/02, F01P 3/18

(54) **AGENCEMENT DE FIXATION D'UN CONVERTISSEUR DE TENSION ET D'UN THERMOSTAT**
ANORDNUNG ZUR BEFESTIGUNG EINES SPANNUNGSWANDLERS UND EINES THERMOSTATS
ARRANGEMENT FOR FASTENING A VOLTAGE CONVERTER AND A THERMOSTAT

(30) Priorité: 10.03.2020 FR 2002387
(43) Date de publication de la demande: 18.01.2023
(73) Titulaire: Renault s.a.s, 92100 Boulogne Billancourt (FR)
(72) Inventeur: GHIRARDINI, Armand, 78430 Louveciennes (FR); SEIGNEUR, Quentin, 78000 VERSAILLES (FR)
(86) Numéro de dépôt international: PCT/EP2021/055845
(87) Numéro de publication internationale: WO 2021/180677

(56) Documents cités:
- WO-A1-2016/024051
- CN-A- 110 126 647
- DE-A1- 102005 047 653
- DE-A1- 102006 004 419
- DE-A1- 102014 208 499
- DE-A1- 4 209 477
- DE-B4- 112008 002 870
- FR-A1- 2 890 606
- US-A1- 2004 163 861
- US-A1- 2018 163 607

## Description

### Domaine Technique de l'invention

L'invention concerne une caisse de véhicule, notamment de véhicule automobile, comprenant un agencement comprenant un support pour un convertisseur de tension et un thermostat. L'invention porte encore sur un véhicule comprenant une telle caisse.

### Etat de la technique antérieure

Un véhicule, en particulier un véhicule automobile, a généralement un compartiment moteur restreint. En outre, le compartiment moteur est généralement encombré par un grand nombre de composants. Il est alors intéressant de réduire le volume des composants.

Pour réduire le volume des composants de type électrique, notamment à forte consommation, on augmente généralement leur tension à puissance constante. La tension est ainsi généralement passée à 48V au lieu de la tension habituelle de 12V liée au standard des batteries, notamment de type plomb. Cela engendre la création d'un réseau de 48V au sein du véhicule automobile. Un tel réseau requiert d'intégrer un convertisseur de tension continue 12V-48V (nommé DC-DC converter en termes anglo-saxon pour Direct Current to Direct Current converter).

Seulement, l'intégration d'un tel convertisseur est complexe eu égard à son encombrement. En cas de convertisseur à refroidissement liquide, davantage volumineux, cela est encore plus difficile.

Un exemple d'agencement pour véhicule comprenant un convertisseur de courant est montré par le document US2018/163607A1 et une caisse de véhicule comprenant un agencement présentant un support de convertisseur de courant est présentée dans le document WO2016/0240051A1.

### Présentation de l'invention

Le but de l'invention est de fournir une caisse de véhicule comprenant un agencement remédiant aux inconvénients ci-dessus. En particulier, l'invention permet l'intégration d'un convertisseur de courant à refroidissement liquide et d'un boîtier thermostatique sans encombrer davantage le compartiment moteur.

### Résumé de l'invention

Pour atteindre cet objectif, l'invention porte sur une caisse de véhicule, notamment de véhicule automobile, comprenant un agencement pour véhicule, notamment pour véhicule automobile, comprenant:
- un convertisseur de courant, notamment un convertisseur de courant comprenant un circuit de refroidissement liquide,
- un thermostat,
- un moteur à combustion interne,
- un support positionnant et/ou maintenant en position le thermostat et positionnant et/ou maintenant en position le convertisseur de courant, et un échangeur air/eau, l'échangeur refroidissant des gaz d'admission du moteur à combustion interne, le fluide de refroidissement circulant dans l'échangeur étant commun à celui circulant dans le circuit de refroidissement liquide du convertisseur de courant,
- la caisse comportant un tablier, un longeron avant gauche et un longeron avant droit, caractérisé en ce que le support, le convertisseur de courant et le thermostat sont agencés à l'avant du tablier, à l'extérieur du longeron avant gauche ou à l'extérieur du longeron avant droit.

Le support peut comprendre une partie principale apte à recevoir le thermostat, et le support peut comprendre une partie secondaire apte à recevoir le convertisseur de courant.

La partie principale et la partie secondaire peuvent être fixées l'une à l'autre, notamment par une fixation de type vis/écrou.

La partie principale peut comprendre une première partie apte à positionner et/ou à maintenir en position le thermostat, notamment par clippage, et la partie principale peut comprendre une deuxième partie apte à connecter la première partie de la partie principale à la partie secondaire du support.

La première partie de la partie principale et la deuxième partie de la partie principale peuvent être fixées l'une à l'autre, notamment par soudage, notamment par soudage par points.

La partie principale et/ou la partie secondaire et/ou la première partie de la partie principale et/ou la deuxième partie de la partie principale peuvent être en tôle d'acier, notamment d'épaisseur comprise entre 1 mm et 3 mm, notamment de l'ordre de 2 mm.

Le support peut être fixé directement ou indirectement sur le longeron avant gauche, notamment au niveau d'une face externe gauche du longeron avant gauche, ou peut être fixé directement ou indirectement sur le longeron avant droit, notamment au niveau d'une face externe droite du longeron avant droit.

L'invention porte encore sur un véhicule, notamment un véhicule automobile, comprenant une caisse telle que définie précédemment, ou un agencement tel que défini précédemment.

### Présentation des figures

Ces objets, caractéristiques et avantages de la présente invention seront exposés en détail dans la description suivante d'un mode de réalisation faite à titre non-limitatif en relation avec les figures jointes parmi lesquelles:
- la figure 1 est une vue schématique d'un véhicule selon un mode de réalisation ;
- la figure 2 est une vue de dessus d'une caisse du véhicule selon un mode de réalisation ;
- la figure 3 est une vue en perspective d'un agencement selon un mode de réalisation ;
- la figure 4 est une autre vue en perspective de l'agencement selon le mode de réalisation ;
- la figure 5 est une vue en perspective d'un support de l'agencement monté sur la caisse selon un mode de réalisation ;
- la figure 6 est une vue en perspective du support selon le mode de réalisation ;
- la figure 7 est une vue de dessus du support selon le mode de réalisation.
- la figure 8 est une vue de dessous du support selon le mode de réalisation ;
- la figure 9 est une autre vue en perspective du support selon le mode de réalisation.

### Description détaillée

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

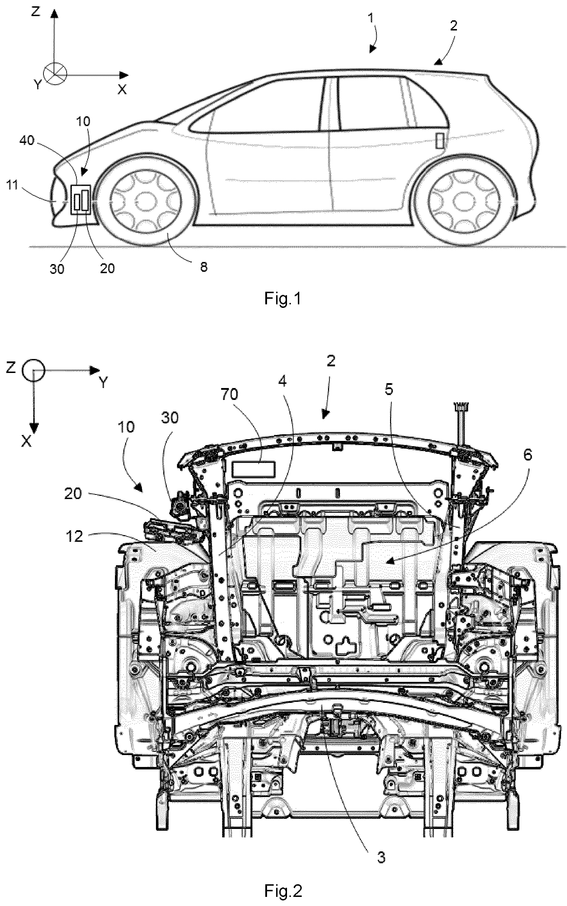

La figure 1 illustre schématiquement un véhicule, en particulier un véhicule automobile 1, selon un mode de réalisation. Le véhicule automobile 1 comprend une caisse 2. Le véhicule automobile 1 ou la caisse 2 comprend un agencement 10.

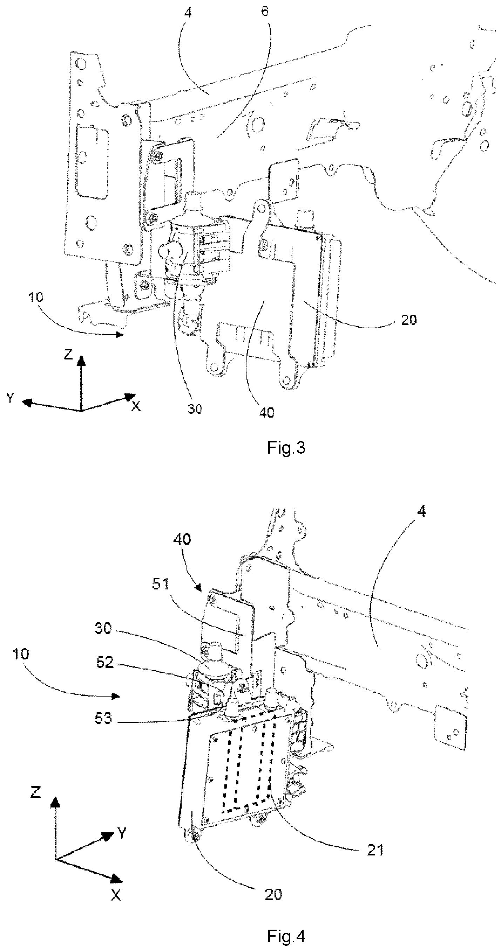

Comme il sera expliqué plus en détail par la suite, l'agencement 10 comprend un convertisseur de courant 20. Par exemple le convertisseur de courant 20 comprend un circuit de refroidissement liquide 21 (illustré schématiquement en pointilles sur la figure 4). L'agencement 10 comprend encore un thermostat 30 ou boîtier thermostatique. L'agencement 10 comprend encore un support 40. Le support 40 est apte à positionner et/ou à maintenir en position le thermostat 30. Le support 40 est encore apte à positionner et/ou à maintenir en position le convertisseur de courant 20. Ainsi, le même support 40 remplit les deux fonctions de maintien du convertisseur de courant 20 et du thermostat 30.

De préférence, le véhicule comprend un train avant. Le train avant comprend une roue avant gauche 8 et une roue avant droite. L'agencement 10 est de préférence agencé devant la roue avant gauche 8 comme il sera expliqué par la suite.

A noter qu'alternativement, l'agencement peut être agencé devant la roue avant droite.

La caisse 2 comprend un tablier 3. Le tablier 3 s'étend transversalement de gauche à droite de la caisse 2, par exemple en formant un arc ou sensiblement un arc, comme illustré en particulier sur la figure 2. De manière générale, le tablier 3 sépare un habitacle du véhicule d'un compartiment moteur 6. La caisse 2 comprend encore un longeron avant gauche 4 et un longeron avant droit 5. Les longerons s'étendent, ou s'étendent sensiblement, selon la direction longitudinale.

Avantageusement, le support 40, le convertisseur de courant 20 et le thermostat 30 sont agencés à l'avant du tablier 3, à l'extérieur du longeron avant gauche 4. Nous entendons par l'adjectif « extérieur » une orientation du côté extérieur du véhicule, c'est-à-dire un positionnement vers l'extérieur du véhicule relativement à un plan vertical comprenant le longeron avant gauche 4, et donc un positionnement du côté gauche du longeron avant gauche 4.

Alternativement, de manière symétrique, le support 40, le convertisseur de courant 20 et le thermostat 30 sont agencés à l'avant du tablier 3, à l'extérieur du longeron avant droit 5.

Comme illustré sur les figures 3, 4 et 5, de préférence, le support 40 est fixé au niveau ou sur le longeron avant gauche 4.

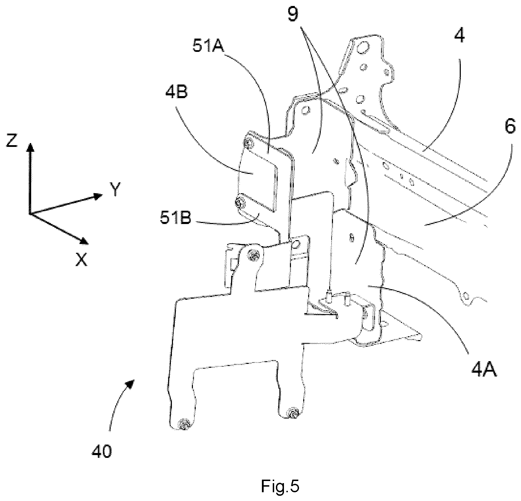

Plus précisément, comme illustré en particulier sur la figure 5, le support 40 est fixé sur une face 4A et/ou sur une face 4B ménagée(s) sur une ou plusieurs excroissances 9 du longeron 4. Avantageusement, la face 4A et/ou la face 4B s'étend verticalement et longitudinalement ou sensiblement verticalement et longitudinalement.

Alternativement, le support 40 est fixé directement sur le longeron avant gauche 4, par exemple au niveau ou sur une face externe (c'est-à-dire extérieure) gauche 6 du longeron avant gauche 4. Par « face externe du longeron gauche», on entend la face s'étendant à gauche du longeron gauche, par exemple une face s'étendant dans un plan vertical et longitudinal ou sensiblement vertical et longitudinal.

Alternativement, le support est fixé de la même manière qu'explicité ci-dessus, directement ou indirectement sur le longeron avant droit 5, notamment au niveau d'une face externe droite du longeron avant droit 5. De la même manière, par « face externe du longeron droit», on entend la face s'étendant à droite du longeron droit, par exemple une face s'étendant dans un plan vertical et longitudinal ou sensiblement vertical et longitudinal.

De préférence, le compartiment moteur 6 est défini comme s'étendant devant le tablier 3, entre deux plans verticaux et longitudinaux, un plan étant par exemple confondu ou sensiblement confondu avec la face externe du longeron droit et un plan étant par exemple confondu ou sensiblement confondu avec la face externe du longeron gauche.

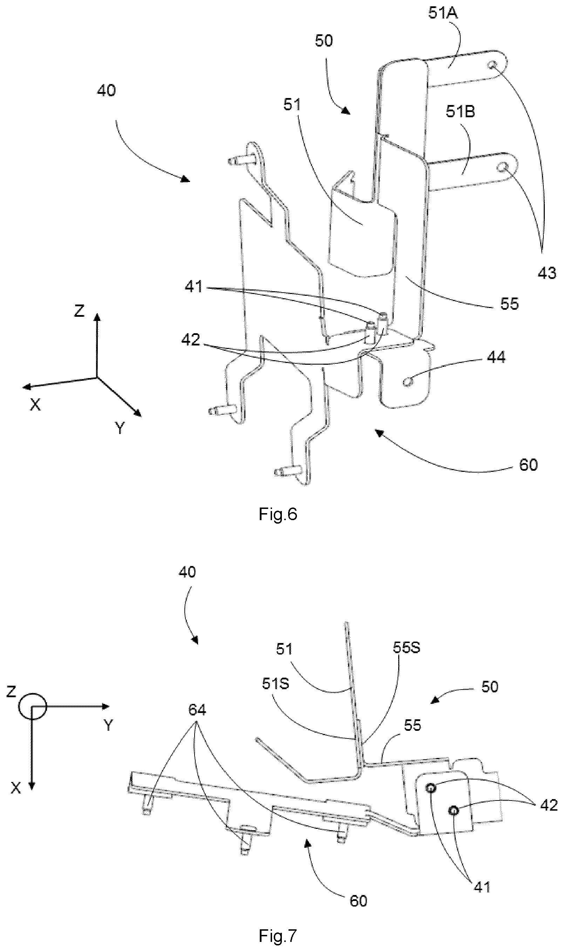

Comme illustré sur les figures 6, 7, 8 et 9, le support 40 comprend une partie principale 50. La partie principale 50 est apte à recevoir le thermostat 30, par exemple à assurer le positionnement et/ou le maintien en position du thermostat 30. Le support 40 comprend encore une partie secondaire 60. La partie secondaire 60 est apte à recevoir le convertisseur de courant 20, par exemple à assurer le positionnement et/ou le maintien en position du convertisseur.

Comme illustré en particulier sur les figures 6 et 7, la partie principale 50 et la partie secondaire 60 sont fixées l'une à l'autre. Par exemple, la fixation est de type vis/écrou. Comme illustré, par exemple deux écrous 42 sont rapportés ou ménagés sur la partie secondaire 60, par exemple par soudage et/ou emboutissage. De tels écrous 42 n'ont alors par exemple pas de pan permettant leur vissage / dévissage. Des vis 41 sont alors insérées à travers des orifices ménagés dans la partie principale 50 pour venir se visser dans les écrous 42 de sorte à maintenir la partie principale 50 et la partie secondaire 60 ensemble. Le fait d'avoir les écrous 42 fixés à demeure à la partie secondaire facilite et rend plus rapide l'obtention du support 40 par assemblage des vis/écrous.

A noter que davantage de vis/écrous pourraient convenir également. En outre, les écrous peuvent être de type à plusieurs pans (quatre ou six par exemple) et peuvent être libres, autrement dit les écrous peuvent ne pas être fixés à la partie secondaire 60 avant leur coopération avec les vis.

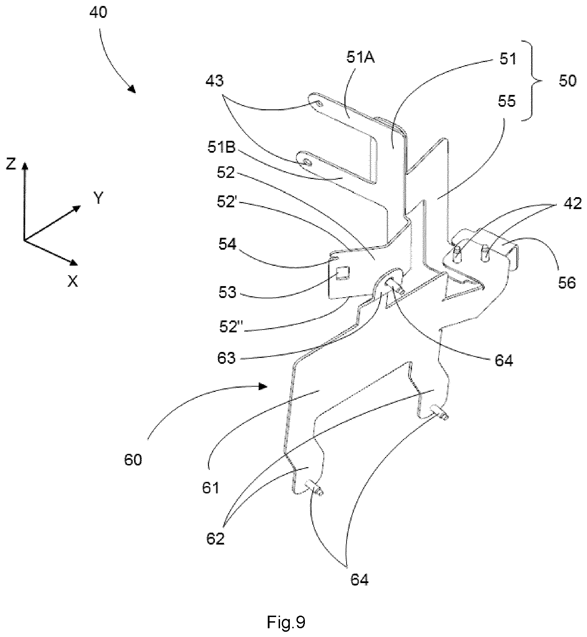

Plus précisément, comme illustré en particulier sur les figures 7, 8 et 9, la partie principale 50 comprend une première partie 51. De préférence, la première partie 51 de la partie principale 50 assure le positionnement et/ou le maintien en position du thermostat 30. Pour ce faire, comme illustré sur les figures 4 et 9, de préférence la première partie 51 de la partie principale 50 comprend une patte 52. Avantageusement, la patte 52 comprend un orifice ou trou 53, par exemple de section carré, et ou une gorge 54 ou rainure 54. Le thermostat, ou un élément se fixant sur le thermostat, coopère alors avec la patte 52 et/ou avec la gorge 54 et/ou avec l'orifice 53 et/ou avec des arêtes supérieure et inférieure 52', 52" de la patte 52, illustrées sur la figure 9. Ainsi, le thermostat 30 se fixe de préférence par clippage sur la patte 52 de la première partie 51 de la partie principale 50.

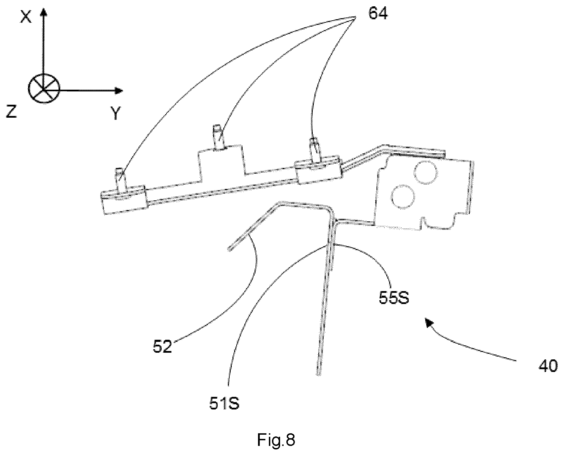

La partie principale 50 comprend une deuxième partie 55. De préférence, la deuxième partie 55 assure la connexion ou fixation de la première partie 51 de la partie principale 50 à la partie secondaire 60 du support 40. La première partie 51 de la partie principale 50 et la deuxième partie 55 de la partie principale 50 sont fixées l'une à l'autre. Cette fixation est par exemple obtenue par soudage, notamment par soudage par points, au niveau de zones planes ou sensiblement planes 51S, 55S, respectivement de la première partie 51 et de la deuxième partie 55, aptes à être assemblées en vis-à-vis (illustrées sur les figures 7 et 8).

En résumé, de préférence, comme illustré sur la figure 9, le support 40 est réalisé par l'assemblage de trois pièces, à savoir la première partie 51 de la partie principale 50, la deuxième partie 55 de la partie principale 50, et la partie secondaire 60. Comme évoqué, la première partie 51 et la deuxième partie 55 sont soudées l'une à l'autre de sorte à obtenir la partie principale 50. La partie principale 50 est assemblée à la partie secondaire 60 par vissage, au niveau d'une extrémité 56 de la deuxième partie 55.

De préférence la fixation du support 40 sur la caisse 2, en l'occurrence au niveau d'un longeron avant, est assurée par des moyens de fixation coopérant avec des trous ou orifices ménagés sur le support 40.

De préférence, le support 40 est évidé de sorte à optimiser sa masse. Ainsi, par exemple la première partie 51 comprend deux languettes 51A, 51B recevant des trous 43 pour la fixation sur la caisse 2 (illustrées sur les figures 5 et 9).

Par exemple, dans le mode de réalisation illustré, seule la partie principale 50 sert d'interface de fixation du support 40 sur la caisse. En effet, par exemple au moins un trou, de préférence deux trous 43, sont ménagés sur la première partie 51, comme illustré sur la figure 9. Par exemple, au moins un trou 44 est ménagé sur la deuxième partie 55, comme illustré sur la figure 6. Ces trous 43, 44 ou orifices circulaires ou oblongs permettent par exemple le passage de goujons ou vis, de préférence soudés sur la caisse, puis le vissage d'écrous après insertion du support 40. De cette manière le support peut être pré-positionné de manière simple et rapide avant d'être fixé, via le vissage d'écrous sur les trois goujons ou vis de la structure de la caisse.

Alternativement, ou en complément, ces trous permettent le passage de vis venant se visser au niveau du longeron, les vis coopérant alors avec des écrous de sorte à prendre en sandwich la partie principale 50 du support 40 et éventuellement le longeron, ou un élément fixé sur le longeron.

Concernant la fixation du convertisseur de courant, de préférence, la partie secondaire 60 présente une surface d'accueil 61 plane ou sensiblement plane, comme illustré sur la figure 9. Par exemple deux oreilles inférieures 62 s'étendent depuis la surface d'accueil vers le bas ou sensiblement vers le bas. Par exemple une oreille supérieure 63 s'étend depuis la surface d'accueil 61 vers le haut ou sensiblement vers le haut. De préférence chaque oreille 62, 63 comprend un moyen de fixation 64 apte à coopérer avec un moyen de fixation du convertisseur. Par exemple les moyens de fixation 64 sont des goujons filetés ou axes filetés ou vis, de préférence fixés sur les oreilles, par exemple par soudage de sorte à faciliter le montage du convertisseur. Dans ce cas, le convertisseur comprend des orifices aptes à être traversés par ces goujons 64 de sorte à permettre un pré-positionnement simple et rapide du convertisseur sur le support 40. Le maintien en position du convertisseur sur la surface d'accueil 61 est assuré en vissant des écrous sur les goujons 64 de manière à prendre en sandwich le convertisseur entre la surface d'accueil et les écrous.

De préférence, la partie principale 50 et/ou la partie secondaire 60 et/ou la première partie 51 de la partie principale 50 et/ou la deuxième partie 55 de la partie principale 50 sont en tôle d'acier, par exemple d'épaisseur comprise entre 1 mm et 3 mm, notamment de l'ordre de 2 mm.

Avantageusement, l'agencement 10 comprend un circuit de refroidissement liquide 21 du convertisseur de courant 20. Par exemple, le convertisseur de courant comprend lui-même le circuit de refroidissement liquide 21. De préférence, l'agencement comprend un échangeur 70, par exemple air/eau, illustré schématiquement et à un emplacement arbitraire sur la figure 2. Par exemple, l'échangeur 70 est apte à refroidir des gaz d'admission, suralimentés ou non. De préférence, le fluide de refroidissement circulant dans l'échangeur 70 est le même que celui circulant dans le circuit de refroidissement liquide 21 du convertisseur de courant 20. Autrement dit, le circuit de refroidissement liquide 21 du convertisseur et l'échangeur 70 refroidissant les gaz d'admission sont par exemple « montés en série ».

La solution est particulièrement adaptée à un véhicule comprenant un circuit de refroidissement liquide, un convertisseur de tension et disposant d'au moins un élément de structure de type longeron, s'étendant longitudinalement ou sensiblement longitudinalement. L'implantation du convertisseur de courant, éventuellement doté du circuit de refroidissement liquide et du thermostat est réalisable sans modification externe du véhicule.

Ainsi, bien que des normes, notamment de dépollution, engendrent l'ajout de composants dans le compartiment moteur alors que le volume du compartiment moteur reste constant, les véhicules peuvent toutefois être équipé d'un convertisseur de tension et d'un thermostat. En outre, grâce au convertisseur en particulier, un réseau électrique de tension 48V par exemple, peut alors être créé au sein du véhicule. Un tel réseau électrique permet alors de diminuer le volume d'équipements électriques à puissance constante présents au sein du compartiment moteur ce qui permet un gain de place dans le compartiment moteur. Par exemple, le circuit électrique 48V permet de diminuer le volume de grilles chauffantes permettant d'atteindre les températures nécessaires au bon fonctionnement d'un système de dépollution intégré à l'échappement dès le démarrage du moteur. Grâce à ces gains de place au sein du compartiment moteur, l'implantation d'autres éléments devient possible.

Enfin, la solution peut avantageusement équiper des véhicules déjà en cours de production, sans pour autant leur faire subir d'importantes modifications extérieures et dimensionnelles. En effet, la solution offre un système de fixation pour convertisseur de tension et boitier thermostatique particulièrement compact.

La solution permet de garantir un fonctionnement optimal du convertisseur de courant grâce au circuit de refroidissement liquide, de préférence à température constante. De plus, comme évoqué précédemment, le liquide du circuit de refroidissement liquide 21 peut encore assurer le refroidissement d'un circuit ou système de refroidissement de l'admission d'air, par exemple du type utilisé dans des véhicules répondant à certaines normes de dépollution.

A noter que dans le mode de réalisation illustré, le support 40 est disposé devant le passage de roue avant gauche, en dehors du compartiment moteur 6. Cet emplacement est à privilégier en cas de batterie agencée à gauche du compartiment moteur. En effet, cela permet de limiter la longueur de câble entre la batterie et le convertisseur de courant et par conséquent d'utiliser des câbles de section relativement faible. Evidemment, en cas de batterie agencée à droite, il convient de privilégier un emplacement à droite, au niveau du longeron droit par exemple.

Le support 40 équipé du convertisseur et du thermostat est donc logé dans un espace clos ou sensiblement clos, derrière un bouclier avant 11 (illustré sur la figure 1) du véhicule et devant un passage de roue 12 (illustré sur la figure 2) de la roue avant gauche 8.

A noter que l'installation du convertisseur et celle du thermostat sont ainsi simplifiées. Etant donné que le positionnement et le maintien de ces deux éléments se fait conjointement sur le même support 40, les dispersions de fabrication et de montage sont amoindries voire nulles, l'espace entre ces éléments peut donc être diminué. En d'autres termes, les jeux sont réduits entre les éléments puisque leurs positions sont davantage maîtrisées.

De plus, en termes d'optimisation de la production, le convertisseur 20 et le thermostat 30 peuvent être préparés sur leur support 40 en bord de chaîne de production, de préférence en temps masqué par rapport à la chaîne de production. Ainsi le temps d'assemblage, par exemple par vissage et/ou clippage, du convertisseur et du thermostat sur le support n'est alors pas imputé sur la chaîne de production. De plus, l'ensemble convertisseur, thermostat et support est alors assemblé sur la caisse en une seule opération ce qui limite la durée des opérations sur la chaîne pour l'opérateur et présente un gain de temps aussi bien en manipulation qu'en vissage. Le montage est donc simplifié, seuls des écrous (par exemple trois) sont apportés et vissés par l'opérateur.

La solution permet encore une économie de matière et une simplification de référencement de pièces, un seul support servant désormais à maintenir deux éléments au lieu de l'utilisation de deux références de supports distincts.

En remarque, la solution selon l'invention atteint donc l'objectif recherché d'intégrer un convertisseur de courant au sein d'un véhicule malgré le faible espace disponible au sein du compartiment moteur et présente les avantages suivants:
- elle peut être utilisée sur toutes les gammes de véhicules automobiles, aussi bien à motorisation thermique qu'à motorisation hybride ;
- elle peut être appliquée à d'autres véhicules nécessitant une optimisation du volume du compartiment moteur.

## Revendications

1. Caisse (2) de véhicule, notamment de véhicule automobile (1), comprenant un agencement (10) pour véhicule, notamment pour véhicule automobile (1), comprenant :
- un convertisseur de courant (20), notamment un convertisseur de courant (20) comprenant un circuit de refroidissement liquide (21),
- un thermostat (30),
- un moteur à combustion interne,
- un support (40) positionnant et/ou maintenant en position le thermostat (30) et positionnant et/ou maintenant en position le convertisseur de courant (20), et un échangeur (70) air/eau, l'échangeur refroidissant des gaz d'admission du moteur à combustion interne, le fluide de refroidissement circulant dans l'échangeur (70) étant commun à celui circulant dans le circuit de refroidissement liquide (21) du convertisseur de courant (20),
- la caisse comportant un tablier (3), un longeron avant gauche (4) et un longeron avant droit (5),
**caractérisé en ce que** le support (40), le convertisseur de courant (20) et le thermostat (30) sont agencés à l'avant du tablier (3), à l'extérieur du longeron avant gauche (4) ou à l'extérieur du longeron avant droit (5).

2. Caisse (2) selon la revendication 1, **caractérisée en ce que** le support (40) comprend une partie principale (50) apte à recevoir le thermostat (30), et **en ce que** le support (40) comprend une partie secondaire (60) apte à recevoir le convertisseur de courant (20).

3. Caisse (2) selon la revendication 2, **caractérisée en ce que** la partie principale (50) et la partie secondaire (60) sont fixées l'une à l'autre, notamment par une fixation de type vis/écrou.

4. Caisse (2) selon l'une des revendications 2 ou 3, **caractérisée en ce que** la partie principale (50) comprend une première partie (51) positionnant et/ou maintenant en position le thermostat (30), notamment par clippage, et **en ce que** la partie principale (50) comprend une deuxième partie (55) apte à connecter la première partie (51) de la partie principale (50) à la partie secondaire (60) du support (40).

5. Caisse (2) selon la revendication précédente, **caractérisée en ce que** la première partie (51) de la partie principale (50) et la deuxième partie (55) de la partie principale (50) sont fixées l'une à l'autre, notamment par soudage, notamment par soudage par points.

6. Caisse (2) selon l'une des revendications 2 à 5, **caractérisée en ce que** la partie principale (50) et/ou la partie secondaire (60) et/ou la première partie (51) de la partie principale (50) et/ou la deuxième partie (55) de la partie principale (50) sont en tôle d'acier, notamment d'épaisseur comprise entre 1 mm et 3 mm, notamment de l'ordre de 2 mm.

7. Caisse (2) selon l'une des revendications précédentes, **caractérisée en ce que** le support (40) est fixé directement ou indirectement sur le longeron avant gauche (4), notamment au niveau d'une face externe gauche (6) du longeron avant gauche (4), ou est fixé directement ou indirectement sur le longeron avant droit (5), notamment au niveau d'une face externe droite (7) du longeron avant droit (5).

8. Véhicule, notamment véhicule automobile (1), **caractérisé en ce qu'**il comprend une caisse (2) selon l'une des revendications 1 à 7.

## Patentansprüche

1. Karosserie (2) eines Fahrzeugs, insbesondere eines Kraftfahrzeugs (1), welche eine Anordnung (10) für ein Fahrzeug, insbesondere für ein Kraftfahrzeug (1), umfasst, welche umfasst:
- einen Stromwandler (20), insbesondere einen Stromwandler (20), der einen Flüssigkeitskühlkreislauf (21) umfasst,
- einen Thermostat (30),
- einen Verbrennungsmotor,
- einen Halter (40), der den Thermostat (30) positioniert und/oder in Position hält und den Stromwandler (20) positioniert und/oder in Position hält, und einen Luft/Wasser-Wärmetauscher (70), wobei der Wärmetauscher Einlassgase des Verbrennungsmotors kühlt, wobei das in dem Wärmetauscher (70) zirkulierende Kühlfluid dasselbe wie dasjenige ist, das in dem Flüssigkeitskühlkreislauf (21) des Stromwandlers (20) zirkuliert,
- wobei die Karosserie eine Spritzwand (3), einen linken vorderen Längsträger (4) und einen rechten vorderen Längsträger (5) aufweist,
**dadurch gekennzeichnet, dass** der Halter (40), der Stromwandler (20) und der Thermostat (30) vor der Spritzwand (3) angeordnet sind, auf der Außenseite des linken vorderen Längsträgers (4) oder auf der Außenseite des rechten vorderen Längsträgers (5).

2. Karosserie (2) nach Anspruch 1, **dadurch gekennzeichnet, dass** der Halter (40) einen Hauptteil (50) umfasst, der geeignet ist, den Thermostat (30) aufzunehmen, und dadurch, dass der Halter (40) einen sekundären Teil (60) umfasst, der geeignet ist, den Stromwandler (20) aufzunehmen.

3. Karosserie (2) nach Anspruch 2, **dadurch gekennzeichnet, dass** der Hauptteil (50) und der sekundäre Teil (60) aneinander befestigt sind, insbesondere durch eine Befestigung vom Schraube/Mutter-Typ.

4. Karosserie (2) nach einem der Ansprüche 2 oder 3, **dadurch gekennzeichnet, dass** der Hauptteil (50) einen ersten Teil (51) umfasst, der den Thermostat (30) positioniert und/oder in Position hält, insbesondere durch Clipsen, und dadurch, dass der Hauptteil (50) einen zweiten Teil (55) umfasst, der geeignet ist, den ersten Teil (51) des Hauptteils (50) mit dem sekundären Teil (60) des Halters (40) zu verbinden.

5. Karosserie (2) nach dem vorhergehenden Anspruch, **dadurch gekennzeichnet, dass** der erste Teil (51) des Hauptteils (50) und der zweite Teil (55) des Hauptteils (50) aneinander befestigt sind, insbesondere durch Schweißen, insbesondere durch Punktschweißen.

6. Karosserie (2) nach einem der Ansprüche 2 bis 5, **dadurch gekennzeichnet, dass** der Hauptteil (50) und/oder der sekundäre Teil (60) und/oder der erste Teil (51) des Hauptteils (50) und/oder der zweite Teil (55) des Hauptteils (50) aus Stahlblech bestehen, insbesondere mit einer Dicke zwischen 1 mm und 3 mm, insbesondere in der Größenordnung von 2 mm.

7. Karosserie (2) nach einem der vorhergehenden Ansprüche, **dadurch gekennzeichnet, dass** der Halter (40) direkt oder indirekt am linken vorderen Längsträger (4) befestigt ist, insbesondere an einer linken Außenseite (6) des linken vorderen Längsträgers (4), oder direkt oder indirekt am rechten vorderen Längsträger (5) befestigt ist, insbesondere an einer rechten Außenseite (7) des rechten vorderen Längsträgers (5).

8. Fahrzeug, insbesondere Kraftfahrzeug (1), **dadurch gekennzeichnet, dass** es eine Karosserie (2) nach einem der Ansprüche 1 bis 7 umfasst.

## Claims

1. Body (2) of a vehicle, in particular of a motor vehicle (1), comprising an arrangement (10) for a vehicle, in particular for a motor vehicle (1), comprising:
- a current converter (20), in particular a current converter (20) comprising a liquid cooling circuit (21),
- a thermostat (30),
- an internal combustion engine,
- a support (40) positioning and/or holding in position the thermostat (30) and positioning and/or holding in position the current converter (20), and an air/water exchanger (70), the exchanger cooling intake gases of the internal combustion engine, the cooling fluid circulating in the exchanger (70) being common to that circulating in the liquid cooling circuit (21) of the current converter (20),
- the body having a bulkhead (3), a left front side member (4) and a right front side member (5),
**characterized in that** the support (40), the current converter (20) and the thermostat (30) are arranged at the front of the bulkhead (3), on the outside of the left front side member (4) or on the outside of the right front side member (5).

2. Body (2) according to Claim 1, **characterized in that** the support (40) comprises a main part (50) able to receive the thermostat (30), and **in that** the support (40) comprises a secondary part (60) able to receive the current converter (20).

3. Body (2) according to Claim 2, **characterized in that** the main part (50) and the secondary part (60) are fastened to one another, in particular by a fastening of the screw/nut type.

4. Body (2) according to either of Claims 2 and 3, **characterized in that** the main part (50) comprises a first part (51) positioning and/or holding in position the thermostat (30), in particular by clip-fastening, and **in that** the main part (50) comprises a second part (55) able to connect the first part (51) of the main part (50) to the secondary part (60) of the support (40).

5. Body (2) according to the preceding claim, **characterized in that** the first part (51) of the main part (50) and the second part (55) of the main part (50) are fastened to one another, in particular by welding, in particular by spot welding.

6. Body (2) according to one of Claims 2 to 5, **characterized in that** the main part (50) and/or the secondary part (60) and/or the first part (51) of the main part (50) and/or the second part (55) of the main part (50) are made of steel sheet, in particular with a thickness of between 1 mm and 3 mm, in particular of the order of 2 mm.

7. Body (2) according to one of the preceding claims, **characterized in that** the support (40) is fastened directly or indirectly to the left front side member (4), in particular at a left external face (6) of the left front side member (4), or is fastened directly or indirectly to the right front side member (5), in particular at a right external face (7) of the right front side member (5).

8. Vehicle, in particular motor vehicle (1), **characterized in that** it comprises a body (2) according to one of Claims 1 to 7.
